# EUROPÄISCHE PATENTSCHRIFT

(11) **EP 2 118 555 B1**
(45) Veröffentlichungstag und Bekanntmachung des Hinweises auf die Patenterteilung: **22.12.2010**
(21) Anmeldenummer: 08701179.7
(22) Anmeldetag: 23.01.2008
(51) Int. Cl.: F16P 3/14, B21D 55/00, B30B 15/28

(54) **SICHERHEITSEINRICHTUNG FÜR EINE MASCHINE**
SAFETY DEVICE FOR A MACHINE
DISPOSITIF DE SÉCURITÉ POUR UNE MACHINE

(30) Priorität: 30.01.2007 DE 102007006306
(43) Veröffentlichungstag der Anmeldung: 18.11.2009
(73) Patentinhaber: Pilz GmbH & Co. KG, 73760 Ostfildern (DE)
(72) Erfinder: HUFNAGEL, Mark, 72649 Wolfsschlugen (DE); BARTHE, Guillaume, 73760 Ostfildern (DE); HADER, Soeren, 73732 Esslingen (DE)
(74) Vertreter: Witte, Weller & Partner
(86) Internationale Anmeldenummer: PCT/EP2008/000475
(87) Internationale Veröffentlichungsnummer: WO 2008/092588

(56) Entgegenhaltungen:
- EP-A- 1 246 148
- EP-A- 1 589 355
- WO-A-02/03026
- DE-A1- 10 327 388
- DE-A1- 10 353 353
- DE-A1- 19 910 321
- DE-A1-102004 020 024
- DE-C- 913 013

## Beschreibung

Die vorliegende Erfindung betrifft eine Sicherheitseinrichtung für eine Maschine, bei der ein erstes Maschinenteil eine Arbeitsbewegung gegen ein zweites Maschinenteil ausführt, wobei das erste Maschinenteil eine in Bewegungsrichtung vorlaufende Kante besitzt, die eine Bewegungsebene definiert, mit einem Lichtsender, einem Lichtempfänger und einer Auswerteeinheit, wobei zumindest der Lichtempfänger mit dem ersten Maschinenteil so gekoppelt ist, dass er der Kante in der Arbeitsbewegung des ersten Maschinenteils voraus läuft, wobei der Lichtsender einen Lichtstrahl erzeugt, der weitgehend parallel zu der Kante verläuft und den Lichtempfänger beleuchtet, wobei der Lichtempfänger einen Bildsensor mit einer Vielzahl von Bildpunkten aufweist, um ein ortsaufgelöstes Abbild des Lichtstrahls aufzunehmen, und wobei die Auswerteeinheit dazu ausgebildet ist, ein Ausgangssignal in Abhängigkeit von dem ortsaufgelösten Abbild zu erzeugen, wobei der Lichtsender für die Erzeugung des Lichtstrahls eine Lichtquelle mit einer überwiegend inkohärenten Strahlung aufweist, und wobei der Lichtempfänger eine Abbildungsoptik mit einem Brennpunkt und einer Blende aufweist, die in etwa in dem Brennpunkt angeordnet ist.

Eine solche Sicherheitseinrichtung ist aus der DE 103 27 388 A1 bekannt.

Die bekannte Sicherheitseinrichtung weist eine Sendeeinheit, ein Projektionsmedium und eine Kamera auf, die allesamt an dem Oberwerkzeug befestigt sind und somit mit diesem in der Arbeitsbewegung mitgeführt werden. Die Sendeeinheit besteht dabei vorzugsweise aus einem oder mehreren Lasern. Die Kamera weist eine flächige Anordnung von fotoempfindlichen Elementen auf, beispielsweise CCD-Elemente oder CMOS-Elemente. Die Sendeeinheit erzeugt ein Bündel parallel laufender Projektionslichtstrahlen, die parallel zur Unterkante des Oberwerkzeugs verlaufen, wobei die Projektionslichtstrahlen einen Schutzbereich definieren, der sich an der Unterkante des Oberwerkzeugs anschließt. Die Projektionslichtstrahlen werden auf das Projektionsmedium abgebildet, wodurch auf diesem ein Projektionsmuster generiert wird. Dieses Projektionsmuster wird von der Kamera erfasst. Die Auswertung der mit der Kamera generierten Bildinformation erfolgt in einer Auswerteeinheit und zwar nach der Methode eines Referenzbildvergleichs. Wird bei diesem Vergleich eine Abweichung des aktuell von der Kamera detektierten Projektionsmusters von einem Referenzbild festgestellt, wird auf einen Objekteingriff in dem Schutzbereich erkannt und ein Objektfeststellungssignal erzeugt, was dazu führt, dass die Maschine deaktiviert wird. Zudem ist vorgesehen, durch Auswertung der Bildinformation den Abstand eines in den Schutzbereich hineinragenden Gegenstands zur Kante des Oberwerkzeugs zu erfassen. Die Bestimmung der Kantenlage eines Gegenstandes ist jedoch nicht thematisiert.

DE 103 27 388 A1 offenbart zwar einen gattungsgemäßen Lichtsender, es ist aber nicht ausdrücklich offenbart, dass dieser Lichtsender eine Lichtquelle aufweist, mit der eine überwiegend inkohärente Strahlung erzeugt wird. Des Weiteren offenbart DE 103 27 388 A1 zwar den Einsatz einer Kamera, dabei ist jedoch nicht ausdrücklich offenbart, dass diese Kamera eine Abbildungsoptik mit einem Brennpunkt und einer Blende aufweist, bei der die Blende in etwa in dem Brennpunkt angeordnet ist.

Aus der DE 10 2004 020 024 A1 ist eine weitere Sicherheitseinrichtung bekannt. Diese Sicherheitseinrichtung besitzt einen Lichtsender, der eine Sendeoptik sowie eine LED oder Laserdiode als Lichtquelle aufweist. Die Sendeoptik weitet das Licht der Lichtquelle zu einem Lichtstrahl auf. Dieser Lichtstrahl beleuchtet einen Lichtempfänger mit einem Bildsensor. Lichtsender und Lichtempfänger bilden somit eine Lichtschranke, die einen Schutzbereich an der unteren vorlaufenden Kante eines Oberwerkzeugs an einer Gesenkbiegepresse überwacht. Diese Lichtschranke wird in der Arbeitsbewegung des Oberwerkzeuges mitgeführt, um das gefährliche Eingreifen eines Gegenstandes in den Arbeitsweg des Oberwerkzeugs zu detektieren. Sobald ein Eingriff in den Schutzbereich detektiert wird, erzeugt die bekannte Sicherheitseinrichtung Signale, die zum Abschalten der Gesenkbiegepresse führen. Darüber hinaus soll die in DE 10 2004 020 024 A1 beschriebene Sicherheitsvorrichtung auch noch in der Lage sein, Messwerte zu ermitteln, die auf einzelne Werkstück- oder Werkzeugbereiche bezogen sind. Diese Messwerte sollen anhand des Schattenrisses bestimmt werden, die das Werkstück oder das Werkzeug auf den lichtempfindlichen Elementen (Bildpunkten) des Bildsensors erzeugt.

DE 10 2004 020 024 A1 schlägt zur Ermittlung der Messwerte vor, bestimmte Bildpunkte des Bildsensors als Messfenster zu definieren, die dorthin verschoben werden, wo Schattenrissbereiche mit vorzugsweise gerader Kontur abgebildet sind. Gegebenenfalls sollen die Messfenster im Verlauf des Biegeprozesses mitwandem. Die Druckschrift beschreibt allerdings nicht, wie die Messwerte tatsächlich ermittelt werden. Die Definition von speziellen Messfenstem lässt vermuten, dass der vorgesehene Algorithmus komplex und rechenintensiv ist, so dass er im Rahmen der zur Verfügung stehenden Messzeiten nur innerhalb relativ kleiner Bildbereiche durchführbar ist, nämlich innerhalb der Messfenster. Deren Position und Größe muss allerdings auch erst bestimmt werden, was einen zusätzlichen Rechenaufwand erfordert. Die Ermittlung von Messwerten, die auf einzelne Werkstück- oder Werkzeugbereiche bezogen sind, ist daher mit der beschriebenen Vorgehensweise nicht unproblematisch.

Die Anmelderin der DE 10 2004 020 024 A1, nämlich die Firma Sick AG, 79183 Waldkirch, Deutschland, bietet außerdem eine Sicherheitseinrichtung der eingangs genannten Art unter der Bezeichnung V4000 an. Die Sicherheitseinrichtung V4000 ist in einer entsprechenden Bedienungsanleitung der Firma Sick AG beschrieben. Es findet sich dort allerdings kein Hinweis, dass die Sicherheitseinrichtung V4000 tatsächlich die Fähigkeit besitzt, Messwerte in Bezug auf einzelne Werkstück- oder Werkzeugbereiche zu ermitteln. Das System V4000 dient "lediglich" als Sicherheitseinrichtung zum Absichern einer Gesenkbiegepresse oder einer ähnlichen Maschine.

Vor diesem Hintergrund ist es eine Aufgabe der vorliegenden Erfindung, eine Sicherheitseinrichtung der eingangs beschriebenen Art anzugeben, bei der die Ermittlung von Messwerten in Bezug auf die Lage, Position und/oder Größe von Werkstück- oder Werkzeugbereichen einfach, schnell und mit einer hohen Genauigkeit möglich ist.

Diese Aufgabe wird nach einem Aspekt der vorliegenden Erfindung dadurch gelöst, dass die Blende einen lichten Innendurchmesser besitzt, der kleiner ist als 1 mm, wobei die Auswerteeinheit dazu ausgebildet ist, Intensitätsverläufe in dem ortsaufgelösten Abbild zu detektieren, die über eine Vielzahl von benachbarten Bildpunkten monoton steigend oder monoton fallend sind, und Wendepunkte in den Intensitätsverläufen zu detektieren, um eine Kantenlage von Objekten zu bestimmen, die in den Lichtstrahl hineinragen.

Kohärenz bezeichnet die Eigenschaft von Licht (oder anderen Wellen), über einen größeren räumlichen und/oder zeitlichen Bereich hinweg eine definierte Phasenbeziehung aufrechtzuerhalten. Zwei oder mehrere Wellen sind genau dann kohärent, wenn sie zeitlich weitgehend invariante Interferenzerscheinungen erzeugen können. Besonders ausgeprägt ist Kohärenz bei Licht, das von Lasern erzeugt wird. Mit anderen Worten sind Laser Lichtquellen, die im Sinne der vorliegenden Erfindung eine überwiegend kohärente Strahlung erzeugen und dementsprechend zu vermeiden sind. Demgegenüber erzeugen Nicht-Laserlichtquellen in der Regel eine inkohärente Strahlung im Sinne der vorliegenden Erfindung.

Gemäß der vorliegenden Erfindung wird somit ein Laser als Lichtquelle für den Lichtsender in einer Sicherheitseinrichtung der eingangs genannten Art vermieden. Dieser Gedanke ist für sich genommen zwar in der DE 10 2004 020 024 A1 grundsätzlich in Betracht gezogen worden, indem dort eine LED als Lichtquelle für den Lichtsender erwähnt ist. DE 10 2004 020 024 A1 beschränkt sich jedoch auf die pure Erwähnung einer LED im Rahmen einer Aufzählung. In der praktischen Realisierung hat die Anmelderin der DE 10 2004 020 024 A1 entgegen der vorliegenden Erfindung eine Laserdiode verwendet, die weitgehend kohärentes Licht erzeugt. Dies ist prima facie auch plausibel und entspricht dem herrschenden Meinungsstand auf diesem Fachgebiet, weil Laserlicht aufgrund seiner kohärenten und typischerweise stark gebündelten Strahlung eine scharfe Abbildung von Werkstück- oder Werkzeugbereichen auf dem Bildsensor und damit scharfe Schattenrisse verspricht. Dies wiederum lässt erwarten, dass die Kantenlage der Werkstück- oder Werkzeugbereiche sehr genau erkannt und vermessen werden kann.

Untersuchungen der vorliegenden Anmelderin haben jedoch gezeigt, dass die Verwendung von kohärentem Laserlicht für die Vermessung von Werkstück- oder Werkzeugbereichen im Schattenriss des Lichtstrahls eher nachteilig ist, weil Interferenzerscheinungen des Laserlichts Signalverläufe auf dem Bildsensor hervorrufen, die sehr schwierig auszuwerten sind. Dementsprechend aufwendig und schwierig ist die Bestimmung der Messwerte.

Überraschenderweise hat sich die Verwendung von inkohärentem, gewissermaßen diffusen oder "unscharfen" Lichts als wesentlich vorteilhafter erwiesen, obwohl die Schattenrisse selbst eher unschärfer sind als bei der Verwendung von scharf gebündeltem Laserlicht. Dieser Nachteil kann jedoch mit Hilfe einer Abbildungsoptik auf der Empfängerseite kompensiert und sogar in einen Vorteil umgekehrt werden. Diese Abbildungsoptik weist einen Brennpunkt und eine Blende auf, wobei die Blende in etwa in dem Brennpunkt angeordnet ist.

Diese Abbildungsoptik hat zur Folge, dass den Bildsensor praktisch nur solche Lichtstrahlen erreichen, die parallel zur optischen Achse einfallen. Andere Lichtstrahlen erreichen den Bildsensor praktisch nicht. Hinzu kommt aber, dass die auftreffenden Lichtstrahlen an den Rändern der Blende eine Beugung erfahren, d.h. aus ihrer Richtung abgelenkt werden. Dabei gilt prinzipiell: Je kleiner die Blende ist, umso stärker ist dieser Effekt ausgeprägt. Die Beugung führt dazu, dass ein Schattenriss auf mehrere benachbarte Bildpunkte des Bildsensors verteilt abgebildet wird. Dies erfolgt allerdings aufgrund des inkohärenten Lichts und der Limitierung auf Parallelstrahlen nahezu ohne Interferenzerscheinungen. Mit anderen Worten ergibt sich aufgrund der Verwendung von inkohärentem Licht und der beschriebenen Abbildungsoptik ein Intensitätsverlauf auf dem Bildsensor, der einen relativ breiten "grauen" Übergangsbereich zwischen dem dunklen Schattenriss des Werkstück- oder Werkzeugbereichs und dem nicht abgedeckten Lichtstrahl aufweist.

Gemäß der vorliegenden Erfindung besitzt die Blende einen lichten Innendurchmesser, der kleiner als 1 mm ist. Diese kleinen Blendenöffnungen führen zu stärkeren Beugungseffekten, was zur Folge hat, dass die Steigung des Intensitätsverlaufs im Bereich einer Hell-Dunkel-Kante relativ flach ausfällt. Je kleiner die Blendenöffnung ist, desto geringer ist die Steigung des Intensitätsverlaufs. Eine geringe Steigung hat zur Folge, dass der Intensitätsverlauf auf eine Vielzahl von benachbarten Bildpunkten abgebildet wird. Dementsprechend viele Stützpunkte stehen zur Verfügung, um den Intensitätsverlauf mathematisch zu modellieren. Darüber hinaus besitzt ein flacher Intensitätsverlauf im Rahmen der vorliegenden Erfindung den weiteren Vorteil, dass einzelne Pixelfehler die Messgenauigkeit nicht oder nur unwesentlich beeinflussen.

Um eine Kantenlage von Objekten zu bestimmen, die in den Lichtstrahl hineinragen, ist bei der vorliegenden Erfindung die Auswerteeinheit dazu ausgebildet, Intensitätsverläufe in dem ortsaufgelösten Abbild zu detektieren, die über eine Vielzahl von benachbarten Bildpunkten monoton steigend oder monoton fallend sind, und Wendepunkte in den Intensitätsverläufen zu detektieren. Somit steht ein sehr einfacher Algorithmus zur Verfügung, um Werkstück- oder Werkzeugbereiche zu vermessen. Die Detektion von solchen Intensitätsverläufen lässt sich durch Vergleich der Intensitäts- bzw. Grauwerte in jeweils benachbarten Bildpunkten relativ einfach und schnell realisieren. Darüber hinaus kann der detektierte Intensitätsverlauf in einem nachfolgenden Schritt sehr schnell ausgewertet werden, um die Lage der Hell-Dunkel-Kante eines Werkstück- oder Werkzeugteils mit hoher Messgenauigkeit zu ermitteln.

Die Detektion von Wendepunkten in den Intensitätsverläufen lässt sich relativ einfach und schnell realisieren, indem man die erste und zweite Ableitung des Intensitätsverlaufs bildet. Darüber hinaus hat sich gezeigt, dass die Lage eines Wendepunktes in einem solchen Intensitätsverlauf eine gute Repräsentation für die tatsächliche Lage der Hell-Dunkel-Kante darstellt. Man kann die Position einer Hell-Dunkel-Kante daher mit hoher Genauigkeit bestimmen, indem man als Positionsmesswert für die Hell-Dunkel-Kante die Position des Wendepunktes in dem Intensitätsverlauf ermittelt.

Prima facie erscheint eine solche unscharfe Abbildung der an sich scharfen Hell-Dunkel-Kante nachteilig, wenn man die Lage der Hell-Dunkel-Kante möglichst exakt vermessen will. Überraschenderweise hat sich jedoch gezeigt, dass der "unscharfe" Intensitätsverlauf relativ einfach ausgewertet werden kann und dass die Lage der Kante sehr genau ermittelt werden kann, weil der resultierende Intensitätsverlauf mathematisch relativ einfach modelliert werden kann. Daher ist trotz der unscharfen Abbildung eine sehr genaue Ermittlung der tatsächlichen Position der Hell-Dunkel-Kante möglich. Eine bevorzugter Vorgehensweise hierzu ist weiter unten beschrieben.

Insgesamt ermöglicht die neue Sicherheitseinrichtung daher eine überraschend einfache und zudem sehr genaue Ermittlung von Positionsmesswerten, die für die Lage einer Werkstück- oder Werkzeugkante im Sichtbereich des Lichtempfängers repräsentativ sind. Der einfache Algorithmus kann sehr schnell abgearbeitet werden. Die oben genannte Aufgabe ist daher vollständig gelöst.

In einer bevorzugten Ausgestaltung erzeugt die Lichtquelle eine Strahlung mit einer flächigen spektralen Intensitätsverteilung.

In dieser Ausgestaltung erzeugt die Lichtquelle eine "polychromatische" Lichtstrahlung mit einer praktisch unbegrenzten Vielzahl von Wellenlängen. In einem bevorzugten Ausführungsbeispiel wird eine so genannte Power-LED als Lichtquelle verwendet, deren Hauptspektrum bei Wellenlängen von etwa 520 bis 550 nm liegt, wobei jedoch auch Wellenlängen außerhalb dieses Spektralbereichs noch vertreten sind. Besonders bevorzugt ist es, wenn die spektrale Intensitätsverteilung der Lichtquelle gaußförmig ist. Eine solche Lichtquelle erzeugt in Verbindung mit der bevorzugten Abbildungsoptik einen sehr gleichmäßigen und weitgehend symmetrischen, monoton ansteigenden oder monoton abfallenden Signalverlauf im Bereich von Hell-Dunkel-Kanten. Daher lässt sich die Lage und Position einer Hell-Dunkel-Kante bei Verwendung einer solchen Lichtquelle besonders einfach ermitteln. Besonders bevorzugt ist in diesem Zusammenhang die Verwendung einer Power-LED mit einer Lichtausbeute, die bei 30 lm/W und höher liegt.

In einer weiteren Ausgestaltung weist der Lichtsender eine Sammellinse auf, um die Strahlung der Lichtquelle zu bündeln.

In dieser Ausgestaltung besitzt die Lichtquelle eine Strahlungskeule mit einem ersten Öffnungswinkel (zumindest parallel zu der Bewegungsebene), und der Lichtstrahl hat einen zweiten Öffnungswinkel (parallel zu der Bewegungsebene), wobei der zweite Öffnungswinkel wesentlich kleiner ist als der erste Öffnungswinkel. In einem bevorzugten Ausführungsbeispiel besitzt die Lichtquelle beispielsweise eine Strahlungskeule mit einem Öffnungswinkel von etwa 100 bis 120°, wohingegen der Öffnungswinkel des Lichtstrahls in einer Größenordnung von etwa 1° oder weniger liegt. Die Sammellinse bündelt die Lichtstrahlung der Lichtquelle also, wohingegen die im Stand der Technik bekannten Systeme durchgehend Linsen verwenden, bei denen der Lichtstrahl der Lichtquelle aufgeweitet wird. Die bevorzugte Ausgestaltung vereinfacht die Ermittlung von Messpositionen an Kanten noch weiter, weil die vorhandene Lichtmenge auf die Beleuchtung des Lichtempfängers konzentriert wird und dementsprechend größere Hell-Dunkel-Unterschiede zur Auswertung zur Verfügung stehen.

In einer weiteren Ausgestaltung besitzt die Blende der Abbildungsoptik im Lichtempfänger einen lichten Innendurchmesser, der kleiner ist als etwa 500 µm und weiter bevorzugt kleiner als 150 µm. In einem besonders bevorzugten Ausführungsbeispiel wird eine Blende mit einem Innendurchmesser von etwa 75 µm verwendet.

Diese Ausgestaltung ist von Vorteil, weil diese besonders kleinen Blendenöffnungen zu besonders starken Beugungseffekten führen, wodurch die Steigung des Intensitätsverlaufs im Bereich eine Hell-Dunkel-Kante besonders flach ausfällt. Der Intensitätsverlauf wird somit auf eine besonders große Zahl von benachbarten Bildpunkten abgebildet, weswegen besonders viele Stützpunkte zur Verfügung stehen und ein besonders gutes Ergebnis bei der mathematischen Modellierung des Intensitätsverlaufs erzielt wird.

In einer weiteren Ausgestaltung ist die Auswerteeinheit dazu ausgebildet, ein fehlersicheres Abschaltsignal zu erzeugen, wenn ein definierter Bereich des Lichtstrahls unterbrochen wird.

In dieser Ausgestaltung ist die Sicherheitseinrichtung fehlersicher im Sinne der Kategorien 3 oder 4 der europäischen Norm EN 954-1 oder im Sinne vergleichbarer Normen, wie etwa der IEC61508, ausgebildet. In bevorzugten Ausführungsbeispielen ist die Auswerteeinheit mehrkanalig-redundant ausgebildet, um diese Fehlersicherheit zu realisieren. Diese Ausgestaltung ist für die Verwendung der Sicherheitseinrichtung zum Absichern einer Maschine von Vorteil, weil sie es dem Maschinenkonstrukteur erleichtert, die entsprechenden Sicherheitsanforderungen zu erfüllen.

In einer bevorzugten Ausgestaltung detektiert die Auswerteeinheit die monoton steigenden oder fallenden Intensitätsverläufe über eine Vielzahl von zumindest vier benachbarten Bildpunkten. Noch mehr bevorzugt ist eine Detektion von solchen Intensitätsverläufen über 6 oder 8 benachbarte Bildpunkte. In einem besonders bevorzugten Ausführungsbeispiel werden jeweils etwa zehn benachbarte Bildpunkte zum Detektieren der Intensitätsverläufe ausgewertet.

In einer weiteren Ausgestaltung erzeugt der Lichtsender den Lichtstrahl mit einer definierten zeitlich variierenden Intensität.

In dieser Ausgestaltung ist der Lichtstrahl des Lichtsenders zeitlich moduliert. Die Modulation repräsentiert einen Signalanteil, der auf der Empfängerseite ausgewertet werden kann, um den Lichtstrahl beispielsweise von Fremdlichteinflüssen zu unterscheiden. Diese Ausgestaltung ermöglicht daher eine höhere Funktionssicherheit und Störsicherheit der neuen Sicherheitseinrichtung.

In einer weiteren Ausgestaltung besitzt der Bildsensor eine zumindest annähernd logarithmische Wandlerkennlinie.

Die Wandlerkennlinie im Sinne dieser Ausgestaltung beschreibt die funktionale Abhängigkeit der elektrischen Ausgangssignale des Bildsensors (elektrische Ströme und/oder Spannungen) in Abhängigkeit von der Strahlungsintensität des auftreffenden Lichts. Ein Bildsensor mit einer annähernd logarithmischen Wandlerkennlinie ist in der Lage, starke Intensitätsunterschiede des einfallenden Lichts mit hoher Messgenauigkeit zu verarbeiten. Daher ist ein solcher Bildsensor besonders vorteilhaft für eine Sicherheitseinrichtung der vorliegenden Art, bei der der Bildsensor mit einem Lichtstrahl direkt beleuchtet wird und bei der Schattenrisse von Objekten, die den Lichtstrahl zumindest teilweise verdecken, detektiert und vermessen werden sollen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Biegepresse mit einem Ausführungsbeispiel der neuen Sicherheitseinrich- tung,
- Fig. 2: eine vereinfachte Darstellung eines bevorzugten Ausführungsbeispiels der neuen Sicherheitseinrichtung,
- Fig. 3: die spektrale Intensitätsverteilung der Lichtquelle aus der Sicherheitseinrich- tung gemäß Fig. 2 im Unterschied zu der spektralen Intensitätsverteilung einer Laserlichtquelle,
- Fig. 4: eine vereinfachte Darstellung des Bildes, das mit dem Bildsensor der Sicher- heitseinrichtung aus Fig. 2 aufgenommen wird, wenn sich das Oberwerkzeug der Biegepresse aus Fig. 1 am Anfang der Arbeitsbewegung befindet,
- Fig. 5: eine Darstellung ähnlich derjenigen aus Fig. 4, wobei sich das Oberwerkzeug hier am unteren Umkehrpunkt befindet,
- Fig. 6: zwei Intensitätsverläufe, die eine Hell-Dunkel-Kante im Sichtfeld des Licht- empfängers der Sicherheitseinrichtung aus Fig. 2 repräsentieren,
- Fig. 7: drei Intensitätsverläufe, wie sie sich im Vergleich zur Fig. 6 bei einer Laser- lichtquelle ergeben, und
- Fig. 8: eine vereinfachte Darstellung der logarithmischen Wandlerkennlinie eines bevorzugten Bildsensors für die Sicherheitseinrichtung aus Fig. 2.

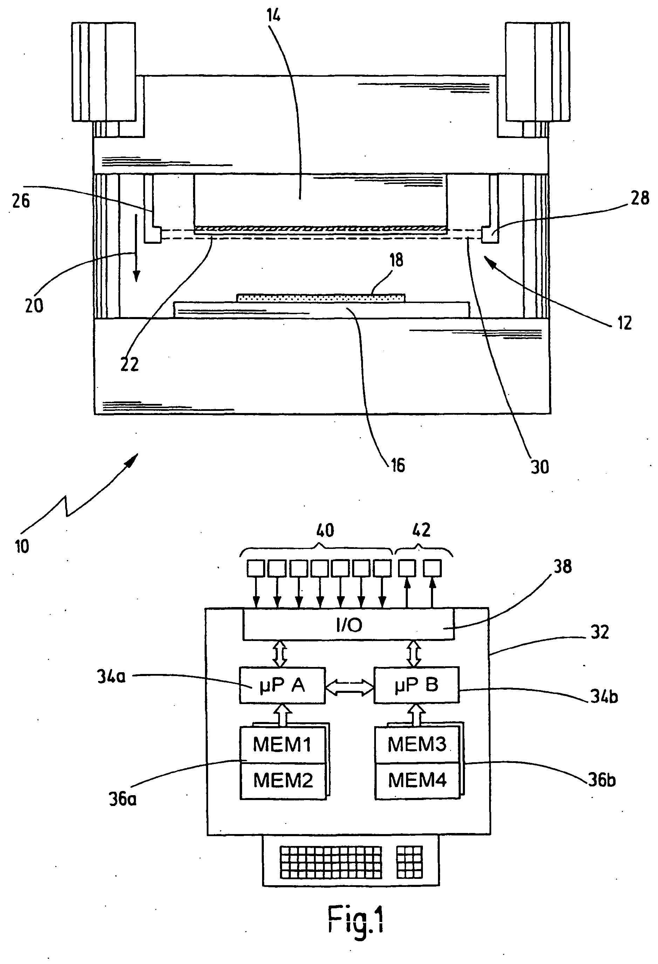

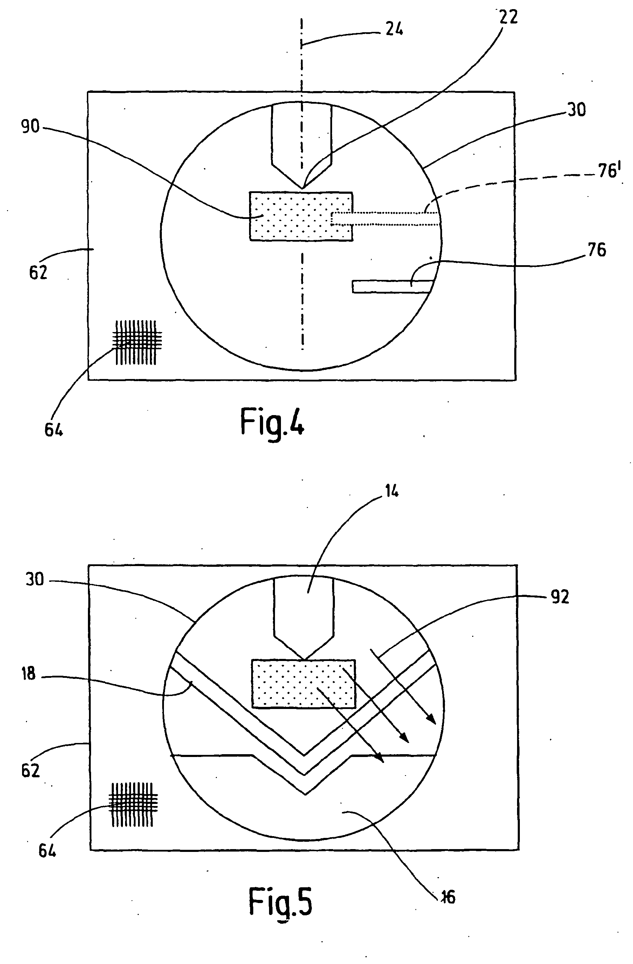

In Fig. 1 ist eine Biegepresse 10 dargestellt, an der eine Sicherheitseinrichtung 12 nach einem Ausführungsbeispiel der vorliegenden Erfindung zur Anwendung kommt, um eine Verletzung von Bedienpersonen im Arbeitsablauf der Biegepresse 10 zu verhindern. Die Biegepresse 10 besitzt ein Oberwerkzeug 14 und ein Unterwerkzeug 16. Das Unterwerkzeug 16 weist typischerweise im Querschnittsprofil (Fig. 5) eine Vertiefung auf, so dass es eine Matrize bildet, in die das Oberwerkzeug 14 eintauchen kann, um das Werkstück 18 zu verformen. Die Arbeitsbewegung des Oberwerkzeugs 14 ist in Fig. 1 bei der Bezugsziffer 20 dargestellt.

Das Oberwerkzeug 14 besitzt eine vorlaufende Kante 22 (Fig. 4), die aufgrund der Arbeitsbewegung 20 eine Bewegungsebene 24 definiert. Jeder Eingriff eines Objekts in die Bewegungsebene 24, wie etwa ein Eingriff mit der Hand eines Bedieners, stellt eine Gefahrensituation dar, insbesondere wenn sich das Oberwerkzeug 14 bereits dicht an das Unterwerkzeug 16 angenähert hat. Die Sicherheitseinrichtung 12 dient dazu, solche Eingriffe im Bereich der vorlaufenden Kante 22 zu detektieren, um in Abhängigkeit davon die Arbeitsbewegung der Biegepresse 10 anzuhalten.

Die vorliegende Sicherheitseinrichtung kann allerdings nicht nur zum Absichern von Biegepressen verwendet werden, wie sie in Fig. 1 dargestellt sind. Die Sicherheitseinrichtung nach der vorliegenden Erfindung kann auch bei Stanzen, Schneidmaschinen und jeglichen anderen, vorzugsweise stationären Maschinen eingesetzt werden, bei denen ein erstes Maschinenteil eine Arbeitsbewegung gegen ein zweites Maschinenteil ausführt. Die Erfindung ist auch nicht auf Anwendungsfälle beschränkt, bei denen lediglich ein Maschinenteil bewegt ist. Die Sicherheitseinrichtung nach der vorliegenden Erfindung kann gleichermaßen bei Maschinen eingesetzt werden, bei denen mehrere Maschinenteile relativ zueinander bewegt sind.

Die Sicherheitseinrichtung 12 beinhaltet einen Lichtsender 26 und einen Lichtempfänger 28, die hier rechts und links von dem Oberwerkzeug 14 an der Biegepresse 10 befestigt sind. Der Lichtsender 26 und der Lichtempfänger 28 sind so mit dem Oberwerkzeug 14 gekoppelt, dass sie mit der Arbeitsbewegung 20 des Oberwerkzeugs 14 mitlaufen. Der Lichtsender 26 erzeugt dabei einen Lichtstrahl 30, der parallel zur vorlaufenden Kante 22 des Oberwerkzeugs 14 verläuft und den Lichtempfänger 28 beleuchtet. Dementsprechend bilden der Lichtsender 26 und der Lichtempfänger 28 gewissermaßen eine Lichtschranke, die den Raumbereich vor und um die Kante 22 des Oberwerkzeugs 14 herum absichert.

Das in Fig. 1 dargestellte Ausführungsbeispiel, bei dem sowohl der Lichtsender 26 als auch der Lichtempfänger 28 mit der Arbeitsbewegung des Oberwerkzeugs 14 mitlaufen, ist aus heutiger Sicht bevorzugt. Prinzipiell könnte jedoch der Lichtsender 26 starr angeordnet sein, wenn er beispielsweise ein Lichtband bzw. eine Lichtebene erzeugt, die parallel zu der Bewegungsebene 24 liegt. Prinzipiell könnte auch der Lichtempfänger stationär sein, sofern er in der Lage ist, ein Abbild des Lichtstrahls 30 an allen relevanten Stellen im Verlauf der Arbeitsbewegung des Oberwerkzeugs 14 aufzunehmen. Mit den heute zur Verfügung stehenden Technologien ist dies jedoch mit einem stationären Bildsensor nicht oder nur äußerst aufwendig zu realisieren, weshalb die mitlaufende Variante aus heutiger Sicht bevorzugt ist.

Zu der Sicherheitseinrichtung 12 gehört ferner eine Auswerteeinheit, die in Fig. 1 bei der Bezugsziffer 32 dargestellt ist. Die Auswerteeinheit 32 kann separat von dem Lichtsender 26 und dem Lichtempfänger 28 angeordnet sein. Alternativ hierzu kann die Auswerteeinheit 32 ganz oder teilweise in dem Lichtsender 26 und/oder im Lichtempfänger 28 integriert sein. In beiden Fällen dient die Auswerteeinheit 32 dazu, den Lichtsender 26 anzusteuern (sofern erforderlich) und die mit dem Lichtempfänger 28 aufgenommenen Bilder auszuwerten, um in Abhängigkeit davon die Arbeitsbewegung 20 des Oberwerkzeugs 14 anzuhalten. Darüber hinaus ermöglicht die Auswerteeinheit 32 in einem bevorzugten Ausführungsbeispiel der Erfindung, die Position und die Abmessungen von einzelnen Werkstück- oder Werkzeugbereichen zu vermessen, wie im Folgenden näher erläutert ist.

Die Auswerteeinheit 32 ist in den bevorzugten Ausführungsbeispielen mehrkanalig-redundant ausgebildet. Dies ist in Fig. 1 anhand von zwei Prozessoren 34a, 34b dargestellt, die sich gegenseitig kontrollieren und ihre Verarbeitungsergebnisse austauschen können. In besonders bevorzugten Ausführungsbeispielen sind die Prozessoren 34a, 34b diversitär, d.h. es handelt sich um verschiedene Prozessoren, um die Wahrscheinlichkeit eines gleichzeitigen Fehlers zu reduzieren.

Jeder der Prozessoren 34a, 34b arbeitet ein Auswerte- und Steuerprogramm ab, das in entsprechend zugeordneten Speicherbereichen 36a, 36b abgelegt ist.

Mit der Bezugsziffer 38 ist eine Schnittstelleneinheit bezeichnet, mit deren Hilfe die Prozessoren 34a, 34b Eingangssignale an Eingängen 40 einlesen und Ausgangssignale an Ausgängen 42 ausgeben. In dem bevorzugten Ausführungsbeispiel erzeugen die Prozessoren 34a, 34b u.a. ein fehlersicheres, vorzugsweise redundantes Ausgangssignal, mit dessen Hilfe die Arbeitsbewegung 20 des Oberwerkzeugs 14 angehalten wird, wenn ein gefährlicher Eingriff in den Bereich unterhalb der vorlaufenden Kante 22 detektiert wird. Außerdem können an weiteren Ausgängen Messdaten bereitgestellt werden, die für die Position, Lage und/oder Größe eines Werkstück- oder Werkzeugbereichs repräsentativ sind.

Typischerweise besitzt die Biegepresse 10 zusätzlich zu der Auswerteeinheit 32 noch eine Betriebssteuerung, die den "normalen" Betriebsablauf steuert. Prinzipiell kann diese Steuerung mit der Auswerteeinheit 32 kombiniert sein. Aus heutiger Sicht ist es jedoch bevorzugt, wenn die Auswerteeinheit 32 separat von der (hier nicht dargestellten) Betriebssteuerung für die Biegepresse 10 realisiert ist.

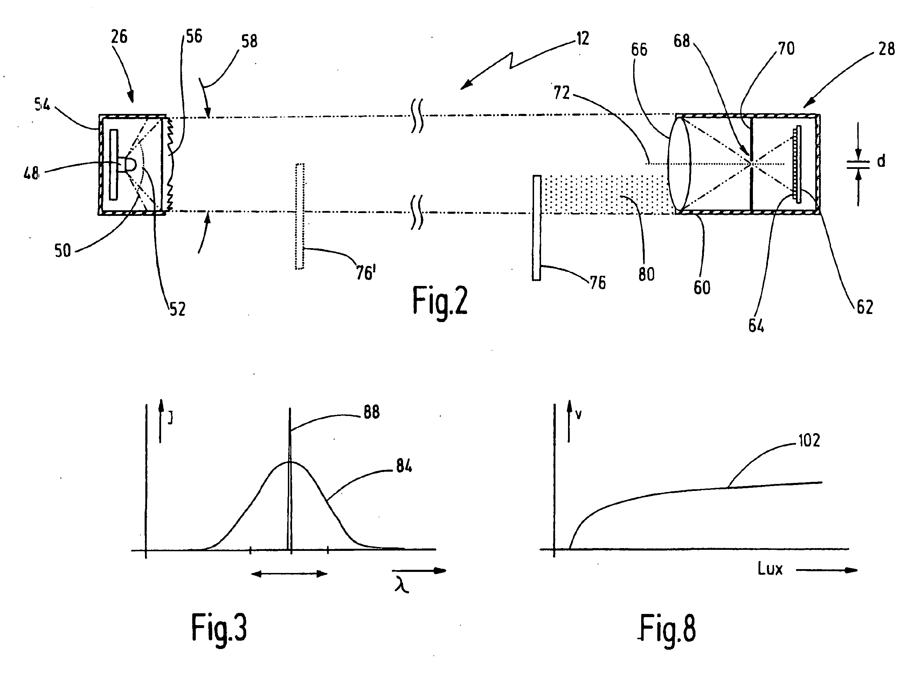

Fig. 2 zeigt den prinzipiellen Aufbau der Sicherheitseinrichtung 12. Der Lichtsender 26 besitzt eine Lichtquelle 48, die in einem besonders bevorzugten Ausführungsbeispiel eine sog. Power-LED mit einer Lichtausbeute von etwa 70 lm/W ist. Prinzipiell könnte es sich jedoch auch um eine Glühlampe oder eine andere Lichtquelle handeln, die eine zumindest weitgehend inkohärente Lichtstrahlung erzeugt.

Die Lichtquelle 48 besitzt hier eine Strahlungskeule 50 mit einem Öffnungswinkel 52, der etwa 100 bis 120° (in einer Ebene parallel zu der Bewegungsebene 24) beträgt. Die Lichtquelle 48 ist in einem Gehäuse 54 eingebaut, das nach vorne hin mit einer Linse 56 abgeschlossen ist. Die Linse 56 ist eine Sammellinse (hier als Fresnellinse), die die Lichtstrahlung der Lichtquelle 48 so weit bündelt, dass der austretende Lichtstrahl 30 einen Öffnungswinkel 58 aufweist, der im bevorzugten Ausführungsbeispiel lediglich 1° oder weniger beträgt.

Die Lichtquelle 48 erzeugt den Lichtstrahl 30 in bevorzugten Ausführungsbeispielen mit einer definierten zeitlichen Variation, die im Lichtempfänger 28 bzw. der Auswerteeinheit 32 als definierte Erwartungshaltung ausgewertet wird, um Fremdlichteinflüsse zu unterdrücken.

Der Lichtempfänger 28 besitzt ein zweites Gehäuse 60, in dem ein Bildsensor 62 mit einer Vielzahl von Bildpunkten 64 angeordnet ist. Vorzugsweise handelt es sich um einen Bildsensor mit einer matrixartigen Anordnung von Bildpunkten, wie dies in den Fig. 4 und 5 dargestellt ist. Der Bildsensor 62 ist in einem bevorzugten Ausführungsbeispiel ein CMOS-Bildsensor mit einer logarithmischen Wandlerkennlinie 102, wie sie in Fig. 8 vereinfacht dargestellt ist. Solche Bildsensoren werden beispielsweise unter der Markenbezeichnung HDRC® vom Institut für Mikroelektronik Stuttgart, Stuttgart, Deutschland angeboten.

Der Lichtempfänger 28 besitzt ferner eine Abbildungsoptik 66 mit einem Brennpunkt 68, an dem die Aperturblende 70 angeordnet ist. In einem bevorzugten Ausführungsbeispiel beträgt der lichte Innendurchmesser d der Blende 70 etwa 75 µm. Noch kleinere Blendenöffnungen wären von Vorteil, um noch homogenere Intensitätsverläufe von Hell-Dunkel-Kanten auf dem Bildsensor 62 zu erzeugen, wobei allerdings eine gewisse Mindestlichtmenge durch die Blende hindurchtreten muss. Prinzipiell könnten auch etwas größere Blendenöffnungen verwendet werden, wenn man eine entsprechende Degradation der Intensitätsverläufe in Kauf nimmt. Eine Größenordnung im Bereich zwischen etwa 50 µm bis 150 µm hat sich als besonders vorteilhaft erwiesen. Die optische Achse der Abbildungsoptik 66 ist in Fig. 2 mit der Bezugsziffer 72 bezeichnet.

Mit der Bezugsziffer 76 ist ein Objekt bezeichnet, das in den Lichtstrahl 30 hineinragt und eine vordere Kante 78 aufweist. Im Bereich der vorderen Kante 78 ergibt sich eine Hell-Dunkel-Kante, die einen entsprechenden Intensitätsverlauf in dem Abbild erzeugt, das mit Hilfe des Bildsensors 62 aufgenommen wird. Der vom Objekt 76 erzeugte Schattenbereich ist in Fig. 2 mit der Bezugsziffer 80 bezeichnet und hier nur vereinfacht dargestellt.

Bei der Bezugsziffer 76' ist das Objekt 76 in einer zweiten Position dargestellt, bei der die Entfernung zum Lichtempfänger 28 größer ist als bei Bezugsziffer 76. Dies ist im Hinblick auf die Intensitätsverläufe, die sich auf dem Bildsensor 62 ergeben, von Bedeutung.

Fig. 3 ist eine vereinfachte Darstellung der spektralen Intensitätsverteilung 84 der Lichtquelle 48. In den bevorzugten Ausführungsbeispielen ist die Intensitätsverteilung 84 weitgehend kontinuierlich und etwa gaußförmig. Zum Vergleich dazu ist bei der Bezugsziffer 88 die spektrale Intensitätsverteilung einer Laserlichtquelle vereinfacht dargestellt.

In einem bevorzugten Ausführungsbeispiel deckt die spektrale Intensitätsverteilung der Lichtquelle 48 ein Spektrum von etwa 520 bis 550 nm ab, wobei das Maximum bei etwa 535 nm liegt. Im Vergleich dazu deckt das Spektrum 88 der Laserlichtquelle nur einen Bereich ab, der sich nahezu linienförmig bei einer Wellenlänge von beispielsweise 535 nm befindet. Die Lichtstrahlung der bevorzugten Lichtquelle 48 deckt jedoch nicht nur einen größeren Spektralbereich ab als eine Laserlichtquelle, sondern die einzelnen Strahlanteile stehen auch nicht in einer festen Phasenbeziehung, um ein möglichst inkohärentes Licht zu erhalten.

Fig. 4 zeigt den Bildsensor 62 mit dem Abbild des Lichtstrahls 30, das im Schattenriss die untere Kante 22 des Oberwerkzeugs 14 sowie die Objekte 76, 76' enthält. In einem bevorzugten Ausführungsbeispiel ist unterhalb der Kante 22 ein Schutzfeld 90 definiert. Das Schutzfeld 90 besteht aus einer Vielzahl von Bildpunkten, auf die der Bereich des Lichtstrahls 30 unterhalb der Kante 22 abgebildet wird. Die Arbeitsbewegung des Oberwerkzeugs 14 wird in dem bevorzugten Ausführungsbeispiel nur dann angehalten, wenn ein Objekt 76' in das Schutzfeld 90 hineinragt, wohingegen ein Objekt 76, das nicht in das Schutzfeld 90 hineinragt, nicht zu einem Stopp der Arbeitsbewegung 20 führt. Die Größe und Lage des Schutzfeldes 90 ist aufgrund der Vielzahl der Bildpunkte 64 variabel einstellbar und kann beispielsweise der Arbeitsgeschwindigkeit des Oberwerkzeugs 14 und dem damit verbundenen Nachlaufweg angepasst werden.

Fig. 4 zeigt ein Abbild des Lichtstrahls 30, wenn sich das Oberwerkzeug 14 noch relativ weit oben befindet. Demgegenüber ist in Fig. 5 ein Abbild dargestellt, nachdem das Oberwerkzeug 14 bereits in die Matrize 16 eingetaucht ist und das Werkstück 18 gebogen hat. Im Schattenriss sind dementsprechend nicht nur das Oberwerkzeug 14, sondern auch die Matrize 16 und das Werkstück 18 zu sehen.

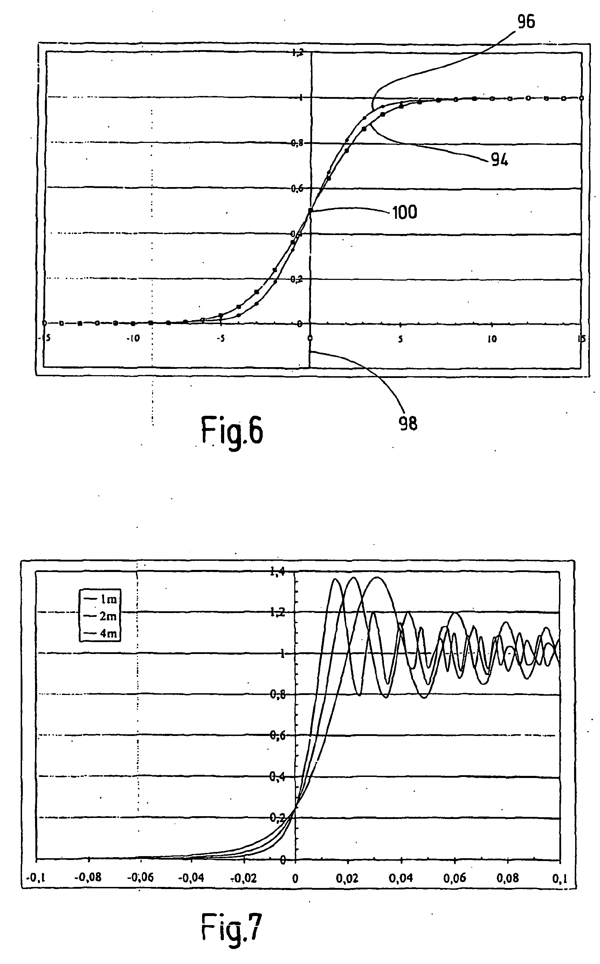

Bei der Bezugsziffer 92 sind Pfeile dargestellt, die eine bevorzugte Suchrichtung andeuten, entlang der die Bildpunkte 64 des Bildsensors 62 nach monoton ansteigenden oder monoton abfallenden Intensitätsverläufen durchsucht werden. Zwei derartige Intensitätsverläufe sind in Fig. 6 beispielhaft dargestellt und mit den Bezugsziffern 94, 96 bezeichnet. Die Darstellung ist so normiert, dass die Hell-Dunkel-Kante bei der Ordinate 98 liegt. Mit anderen Worten befindet sich in der normierten Darstellung der Fig. 6 eine scharfe Hell-Dunkel-Kante bei der senkrechten Linie 98. Der Bereich links von der senkrechten Linie 98 ist der Dunkelbereich, der Bereich rechts von der Linie 98 ist der Hellbereich mit entsprechend hohen Intensitätswerten. Auf der Abszisse sind die Bildpunkte des Bildsensors 62 entlang der Suchrichtung 92 angegeben.

Die Darstellung in Fig. 6 zeigt Intensitätsverläufe, die mit einem Simulationstool berechnet wurden. Messtechnisch erhält man Kurven, die von Rauschen und anderen Signalstörungen überlagert sind. Insofern sind die tatsächlichen Intensitätsverläufe nicht so ideal, wie dies in Fig. 6 dargestellt ist. Der prinzipielle Kurvenverlauf ist jedoch auch bei messtechnisch ermittelten Verläufen vorhanden.

Wie man aus der Darstellung in Fig. 6 erkennen kann, sind die Intensitätsverläufe 94, 96 bei weitem nicht so steil wie die scharfe Hell-Dunkel-Kante vermuten ließe, was vor allem auf Beugungseffekte an der Blendenöffnung 70 zurückzuführen ist. Je kleiner der Innendurchmesser der Blende 70 ist, desto stärker sind die Beugungseffekte ausgeprägt und desto flacher sind die Intensitätsverläufe 94, 96.

Die beiden Intensitätsverläufe 94, 96 resultieren aus unterschiedlichen Entfernungen zwischen dem Objekt 76 bzw. 76' und dem Lichtempfänger 28. Mit anderen Worten ergeben sich leicht unterschiedliche Steigungen der Intensitätsverläufe 94, 96 in Abhängigkeit davon, wie weit eine Objektkante von dem Bildsensor 62 entfernt ist. Die Unterschiede sind jedoch gering (und werden mit zunehmend kleinerer Blendenöffnung geringer) und die prinzipielle Kurvenform der Intensitätsverläufe 94, 96 ist identisch. Es handelt sich in beiden Fällen um monoton steigende Kurvenverläufe bei Dunkel-Hell-Kanten und um entsprechend monoton fallende Intensitätsverläufe bei Hell-Dunkel-Kanten. Durch die geringen Steigungen werden die Intensitätsverläufe 94, 96 auf eine Vielzahl von benachbarten Bildpunkten abgebildet. Im vorliegenden Fall erstreckt sich der interessante Übergangsbereich der Intensitätsverläufe 94, 96 über etwa zehn bis zwölf benachbarte Bildpunkte, die insoweit als Stützstellen einer Funktion ausgewertet werden können, die die Intensitätsverläufe 94, 96 modelliert. Aufgrund des monoton stetigen Verhaltens und der Begrenzung der Maximalwerte (völlig dunkel, maximale Helligkeit) besitzt jeder dieser Kurvenverläufe einen Wendepunkt 100, dessen Lage ein sehr exaktes Maß für die Lage der Objektkante ist (entsprechende Kalibrierung der Abbildungsoptik 66 und des Bildsensors 62 vorausgesetzt). Dementsprechend wird in bevorzugten Ausführungsbeispielen der neuen Sicherheitseinrichtung nach monoton stetigen Intensitätsverläufen 94, 96 gesucht, und es werden die Wendepunkte 100 dieser Intensitätsverläufe identifiziert, um die Position einer Objektkante 78 zu ermitteln. Dies lässt sich mit Hilfe der Prozessoren 34 relativ einfach und schnell realisieren, indem man eine Best-Fit-Funktion durch die Intensitätswerte der benachbarten Bildpunkte bestimmt und anschlie0end die erste und zweite Ableitung dieser Best-Fit-Funktion ermittelt.

Wenn man die Position einer Vielzahl von Objektkanten des Werkstücks 18 ermittelt, lässt sich daraus die Lage, Form und Größe des Werkstücks 18 bestimmen. Beispielsweise kann mit diesem Verfahren der Biegewinkel des Werkstücks 18 nach dem Biegevorgang messtechnisch ermittelt werden. Des Weiteren kann auf diese Weise überprüft werden, ob ein vorgesehenes Oberwerkzeug 14 in der Presse 10 eingespannt ist oder ob ein Werkstück 18 eingelegt ist, dessen Dicke zu hoch oder zu gering ist. Derartige Messwerte werden vorteilhafterweise dazu verwendet, einen fehlerhaften oder gefährlichen Betrieb der Presse 10 zu verhindern.

Fig. 7 zeigt zum Vergleich (ebenfalls berechnete) normierte Intensitätsverläufe einer vergleichbaren Sicherheitseinrichtung, bei der jedoch eine Laserlichtquelle anstelle der bevorzugten Power-LED angenommen wurde. Dargestellt sind drei Kurvenverläufe, die sich ergeben, wenn ein Objekt 76 mit einer Objektkante 78 in drei unterschiedlichen Entfernungen vom Lichtempfänger 28 in den Lichtstrahl 30 hineingehalten wird.

Man erkennt zum einen, dass die Intensitätsverläufe starke Schwankungen aufweisen, die auf Beugungseffekte zurückzuführen sind. Dabei sind in der Darstellung in Fig. 7 lediglich Beugungseffekte berücksichtigt, die sich an der Blendenöffnung ergeben. Nicht berücksichtigt sind überlagerte Beugungseffekte, die sich aufgrund der Kante 78 selbst ergeben können. Insgesamt sind die resultierenden Intensitätsverläufe bei Verwendung einer kohärenten Lichtquelle daher noch komplizierter und dementsprechend schwierig auszuwerten. Es ist außerdem zu erkennen, dass die Intensitätsverläufe in Abhängigkeit von der Entfernung zwischen Objekt und Lichtempfänger stark verschoben sind, was die Ermittlung der exakten Position der Objektkante 78 weiter erschwert.

In bevorzugten Ausführungsbeispielen kommt die neue Sicherheitseinrichtung ohne eine Beschränkung auf spezielle Messfenster aus, d.h. das Abbild des Lichtstrahls 30 mit den Schattenrissen etwaiger Objekte wird vorzugsweise vollflächig ausgewertet, um die Position von Hell-Dunkel-Kanten zu ermitteln.

## Patentansprüche

1. Sicherheitseinrichtung für eine Maschine (10), bei der ein erstes Maschinenteil (14) eine Arbeitsbewegung (20) gegen ein zweites Maschinenteil (16) ausführt, wobei das erste Maschinenteil (14) eine in Bewegungsrichtung vorlaufende Kante (22) besitzt, die eine Bewegungsebene (24) definiert, mit einem Lichtsender (26), einem Lichtempfänger (28) und einer Auswerteeinheit (32), wobei zumindest der Lichtempfänger (28) mit dem ersten Maschinenteil (14) so koppeban ist, dass er der Kante (22) in der Arbeitsbewegung (20) des ersten Maschinenteils (14) voraus läuft, wobei der Lichtsender (26) einen Lichtstrahl (30) erzeugen kann, der weitgehend parallel zu der Kante (22) verläuft und den Lichtempfänger (28) beleuchtet, wobei der Lichtempfänger (28) einen Bildsensor (62) mit einer Vielzahl von Bildpunkten (64) aufweist, um ein ortsaufgelöstes Abbild des Lichtstrahls (30) aufzunehmen, und wobei die Auswerteeinheit (32) dazu ausgebildet ist, ein Ausgangssignal (42) in Abhängigkeit von dem ortsaufgelösten Abbild zu erzeugen, wobei der Lichtsender (26) für die Erzeugung des Lichtstrahls (30) eine Lichtquelle (48) mit einer überwiegend inkohärenten Strahlung aufweist, und wobei der Lichtempfänger (28) eine Abbildungsoptik (66) mit einem Brennpunkt (68) und einer Blende (70) aufweist, die in etwa in dem Brennpunkt (68) angeordnet ist, **dadurch gekennzeichnet, dass** die Blende (70) einen lichten Innendurchmesser (d) besitzt, der kleiner ist als 1 mm, wobei die Auswerteeinheit (32) dazu ausgebildet ist, Intensitätsverläufe (94, 96) in dem ortsaufgelösten Abbild zu delektieren, die über eine Vielzahl von benachbarten Bildpunkten monoton steigend oder monoton fallend sind, und Wendepunkte (100) in den Intensitätsvedäufen (94, 96) zu detektieren, um eine Kantenlage von Objekten (76) zu bestimmen, die in den Lichstrahl (30) hineinragen.

2. Sicherheitseinrichtung nach Anspruch 1, **dadurch gekennzeichnet, dass** die Lichtquelle (48) eine Strahlung mit einer flächigen spektralen Intensitätsverteilung (84) erzeugt.

3. Sicherheitseinrichtung nach Anspruch 1 oder 2, **dadurch gekennzeichnet, dass** der Lichtsender (26) eine Sammellinse (56) aufweist, um die Strahlung der Lichtquelle (48) zu bündeln.

4. Sicherheitseinrichtung nach einem der Ansprüche 1 bis 3, **dadurch gekennzeichnet, dass** der Innendurchmesser (d) kleiner als 500 µm ist, bevorzugt kleiner als 150 µm.

5. Sicherheitseinrichtung nach einem der Ansprüche 1 bis 4, **dadurch gekennzeichnet, dass** die Auswerteeinheit (32) dazu ausgebildet ist, ein fehlersicheres Abschaltsignal (42) zu erzeugen, wenn ein definierter Bereich (90) des Lichtstrahls (30) unterbrochen wird.

6. Sicherheitseinrichtung nach einem der Ansprüche 1 bis 5, **dadurch gekennzeichnet, dass** der Lichtsender (26) den Lichtstrahl (30) mit einer definierten zeitlich variierenden Intensität erzeugt.

7. Sicherheitseinrichtung nach einem der Ansprüche 1 bis 6, **dadurch gekennzeichnet, dass** der Bildsensor (62) eine zumindest annähernd logarithmische Wandlerkennlinie (102) besitzt.

## Claims

1. A safety device for a machine (10) having a first machine part (14) executing an operational movement (20) towards a second machine part (16), the first machine part (14) having an edge (22) projecting in a direction of movement and defining a movement plane (24), the safety device comprising a light transmitter (26), a light receiver (28) and an evaluation unit (32), with at least the light receiver (28) being configured to be coupled to the first machine part (14) such that it runs ahead of the edge (22) during the operational movement (20) of the first machine part (14), with the light transmitter (26) being configured to generate a light beam (30) that runs substantially parallel to the edge (22) and illuminates the light receiver (28), with the light receiver (28) comprising an image sensor (62) having a plurality of pixels (64) for recording a spatially resolved image of the light beam (30), and with the evaluation unit (32) being designed to generate an output signal (42) as a function of the spatially resolved image, wherein the light transmitter (26) comprises a light source (48) having a predominantly incoherent radiation for generating the light beam (30), and the light receiver (28) comprises an imaging optics (66) having a focal point (68) and a aperture stop (70) which is substantially arranged at the focal point (68), **characterized in that** the aperture stop (70) has a clear inside diameter (d) which is smaller than 1 mm, and the evaluation unit (32) is designed to detect intensity characteristics (94, 96) in the spatially resolved image that are monotonically rising or monotonically falling over a plurality of adjacent pixels, and designed to detect inflection points (100) in the intensity characteristics (94, 96) in order to determine an edge location of objects (76) that project into the light beam (30).

2. The safety device of claim 1, **characterized in that** the light source (48) generates a radiation having a continuously extended spectral intensity distribution (84).

3. The safety device of claim 1 or 2, **characterized in that** the light transmitter (26) comprises a collective lens (56) for concentrating the radiation of the light source (48).

4. The safety device of one of claims 1 to 3, **characterized in that** the inside diameter (d) is smaller than 500 µm, preferably smaller than 150 µm.

5. The safety device of one of claims 1 to 4, **characterized in that** the evaluation unit (32) is designed to generate a failsafe shutoff signal (42) when a defined region (90) of the light beam (30) is interrupted.

6. The safety device of one of claims 1 to 5, **characterized in that** the light transmitter (26) generates the light beam (30) with a defined temporally varying intensity.

7. The safety device of one of claims 1 to 6, **characterized in that** the image sensor (62) comprises a characteristic transducer curve (102) which is at least approximately logarithmic.

## Revendications

1. Dispositif de sécurité pour une machine (10), dans lequel une première partie (14) de la machine exécute un déplacement de travail (20) en direction d'une deuxième partie (16) de la machine, la première partie (14) de la machine possédant un chant (22) situé en avant dans la direction de déplacement et définissant un plan de déplacement (24) et présentant un émetteur de lumière (26), un récepteur de lumière (28) et une unité d'évaluation (32), au moins le récepteur de lumière (28) pouvant être couplé à la première partie (14) de la machine de telle sorte qu'il se déplace en avant du chant (22) dans le déplacement de travail (20) de la première partie (14) de la machine, l'émetteur de lumière (26) pouvant former un faisceau lumineux (30) qui s'étend largement en parallèle au chant (22) et qui éclaire le récepteur de lumière (28), le récepteur de lumière (28) présentant un détecteur d'image (62) qui présente plusieurs points d'image (64) pour enregistrer une image à résolution locale du faisceau lumineux (30), l'unité d'évaluation (32) étant configurée pour former un signal de sortie (42) qui dépend de l'image à résolution locale, l'émetteur de lumière (26) présentant pour former le faisceau de lumière (30) une source de lumière (48) dont le rayonnement est principalement non cohérent, le récepteur de lumière (28) présentant une optique (66) de formation d'image dotée d'un point focal (68) et d'un obturateur (70) disposé sensiblement au point focal (68), **caractérisé en ce que** l'obturateur (70) possède un diamètre intérieur (d) inférieur à 1 mm, **en ce que** l'unité d'évaluation (32) est configurée pour détecter des évolutions d'intensité (94, 96) dans l'image à résolution locale qui augmentent ou diminuent de manière monotone sur plusieurs points d'image voisins et pour détecter les points d'inflexion (100) des évolutions (94, 96) d'intensité pour déterminer la position d'un chant d'objet (76) qui pénètre dans le faisceau de lumière (30).

2. Dispositif de sécurité selon la revendication 1, **caractérisé en ce que** la source de lumière (48) forme un rayonnement qui présente une répartition d'intensité spectrale plate (84).

3. Dispositif de sécurité selon les revendications 1 ou 2, **caractérisé en ce que** l'émetteur de lumière (26) présente une lentille collectrice (56) qui concentre le rayonnement de la source de lumière (48).

4. Dispositif de sécurité selon l'une des revendications 1 à 3, **caractérisé en ce que** le diamètre intérieur (d) est inférieur à 500 µm et de préférence inférieur à 150 µm.

5. Dispositif de sécurité selon l'une des revendications 1 à 4, **caractérisé en ce que** l'unité d'évaluation (32) est configurée pour produire un signal de débranchement (42) protégé des défauts lorsqu'une partie définis (90) du faisceau lumineux (30) est interrompue.

6. Dispositif de sécurité selon l'une des revendications 1 à 5, **caractérisé en ce que** l'émetteur de lumière (26) forme un faisceau de lumière (30) dont l'intensité varie de manière définie dans le temps.

7. Dispositif de sécurité selon l'une des revendications 1 à 6, **caractérisé en ce que** le détecteur d'image (62) possède une ligne caractéristique de conversion (102) au moins approximativement logarithmique.
